# EUROPÄISCHE PATENTSCHRIFT

(11) **EP 3 022 603 B1**
(45) Veröffentlichungstag und Bekanntmachung des Hinweises auf die Patenterteilung: **06.09.2017**
(21) Anmeldenummer: 14750449.2
(22) Anmeldetag: 16.07.2014
(51) Int. Cl.: G03F 7/16, G03F 7/20

(54) **DOSIERAPPARAT ZUM HANDGESTEUERTEN DOSIEREN EINES LICHTAUSHÄRTENDEN MATERIALS**
METERING DEVICE FOR METERING A LIGHT-CURING MATERIAL IN A MANUALLY CONTROLLED MANNER
APPAREIL DOSEUR SERVANT À DISTRIBUER MANUELLEMENT UN MATÉRIAU PHOTODURCISSANT

(30) Priorität: 16.07.2013 DE 102013107548
(43) Veröffentlichungstag der Anmeldung: 25.05.2016
(73) Patentinhaber: Viering, Anke Elisabeth, 81737 München (DE)
(72) Erfinder: OFFERMANN,Thomas, deceased (IT)
(74) Vertreter: Schlotter, Alexander Carolus Paul
(86) Internationale Anmeldenummer: PCT/EP2014/065291
(87) Internationale Veröffentlichungsnummer: WO 2015/007792

(56) Entgegenhaltungen:
- WO-A2-2013/064248
- DE-A1-102011 054 959
- DE-U1-202012 100 929

## Beschreibung

Die vorliegende Erfindung betrifft einen Dosierapparat zum handgesteuerten Dosieren eines lichtaushärtenden Materials gemäß Anspruch 1.

Mittels eines Dosierapparats werden Materialien unterschiedlicher Viskositäten für verschiedene Zwecke dosiert. Die Materialien können flüssig, zähflüssig, pastenförmig usw. sein. Der Dosierapparat kann je nach Anwendung und Einsatzzweck vollautomatisiert, teilautomatisiert oder manuell bedient werden. Ein Beispiel eines manuell bedienbaren Dosierapparats ist in der DE 10 2011 054 959 A1 offenbart.

Eine Aufgabe der vorliegenden Erfindung ist es, einen weiteren Dosierapparat vorzuschlagen.

Die erfindungsgemäße Aufgabe wird durch einen Dosierapparat mit den Merkmalen des Anspruchs 1 gelöst.

Erfindungsgemäß wird somit ein Dosierapparat zum handgesteuerten Dosieren eines lichtaushärtenden Materials vorgeschlagen, welcher wenigstens einen Gehäuseabschnitt (wahlweise auch als Gehäuse bezeichnet) aufweist. Der Gehäuseabschnitt weist wenigstens einen ersten Endabschnitt (oder ein erstes Ende) und einen diesem gegenüberliegend angeordnetem zweiten Endabschnitt (oder ein zweites Ende) auf.

Der Gehäuseabschnitt weist ferner eine Aufnahmevorrichtung zum lösbaren Aufnehmen wenigstens einer Dosiervorrichtung auf, wobei in der Dosiervorrichtung das lichtaushärtende Material vorliegt, und wobei die Dosiervorrichtung eine Austrittsöffnung aufweist, aus welchem das lichtaushärtende Material aus dieser austreten kann.

Der Gehäuseabschnitt weist ferner eine lichtemittierende Vorrichtung auf zum Aushärten des lichtaushärtenden Materials, nachdem dieses über die Austrittsöffnung aus der Dosiervorrichtung entnommen wurde.

Die Aufnahmevorrichtung ist dabei derart ausgestaltet, dass die Austrittsöffnung der Dosiervorrichtung - nach deren bestimmungsgemäßen Verbinden mit der Aufnahmevorrichtung - dem ersten Endabschnitt zugewandt ist, oder dass das lichtaushärtende Material bei bestimmungsgemäßem Gebrauch in einen Austrittsbereich abgegeben werden kann, welcher im Bereich des ersten Endabschnitts, jedenfalls aber nicht im Bereich des zweiten Endabschnitts liegt.

Dabei ist die lichtemittierende Vorrichtung im oder am ersten Endabschnitt des Gehäuseabschnitts angeordnet. Ergänzend oder alternativ ist sie angeordnet, um bei ihrer Betätigung Licht - vorzugsweise nur - in Richtung auf den ersten Endabschnitt des Gehäuses abgeben zu können.

Bei allen folgenden Ausführungen ist der Gebrauch des Ausdrucks "kann sein" bzw. "kann haben" usw. synonym zu "ist vorzugsweise" bzw. "hat vorzugsweise" usw. zu verstehen und soll eine erfindungsgemäße Ausführungsform erläutern.

Wann immer hierin Zahlenworte genannt werden, so versteht der Fachmann diese als Angabe einer zahlenmäßig unteren Grenze. Sofern dies zu keinem für den Fachmann erkennbaren Widerspruch führt, liest der Fachmann daher beispielsweise bei der Angabe "ein" oder "einem" stets "wenigstens ein" oder "wenigstens einem" mit. Dieses Verständnis ist ebenso von der vorliegenden Erfindung mit umfasst wie die Auslegung, dass ein Zahlenwort wie beispielsweise "ein" alternativ als "genau ein" gemeint sein kann, wo immer dies für den Fachmann erkennbar technisch möglich ist. Beides ist von der vorliegenden Erfindung umfasst und gilt für alle hierin verwendeten Zahlenworte.

Weiterentwicklungen der vorliegenden Erfindung sind jeweils Gegenstand der Unteransprüche und Ausführungsformen.

Erfindungsgemäße Ausführungsformen können eines oder mehrere der im Folgenden genannten Merkmale in beliebiger Kombination aufweisen.

In bestimmten erfindungsgemäßen Ausführungsformen ist der Dosierapparat ausgestaltet, um auch die lichtemittierende Vorrichtung lösbar hieran oder hierin aufzunehmen. In anderen ist die lichtemittierende Vorrichtung nicht lösbar aufgenommen.

Der Gehäuseabschnitt weist in einigen erfindungsgemäßen Ausführungsformen eine Betätigungsvorrichtung zum Ein- und/oder Ausschalten der lichtemittierenden Vorrichtung auf. Die Betätigungsvorrichtung kann handbetätigbar sein, z. B. mittels Finger, sie kann eine An-/Aus-Funktion und/oder den Dauerbetrieb ermöglichen.

In bestimmten erfindungsgemäßen Ausführungsformen weist die Aufnahmevorrichtung zum lösbaren Aufnehmen wenigstens einer Dosiervorrichtung nur oder ausschließlich einen ersten Halteabschnitt auf - jedenfalls aber keinen zweiten Halteabschnitt - , mittels welchem die Dosiervorrichtung am Gehäuseabschnitt verklemmt oder mittels Gewinde, Rastverbindung, Bajonettverschluss oder dergleichen mit dem Gehäuseabschnitt verbunden werden kann.

In einigen erfindungsgemäßen Ausführungsformen weist die Aufnahmevorrichtung zum lösbaren Aufnehmen wenigstens einer Dosiervorrichtung - wenigstens oder ausschließlich - einen ersten Halteabschnitt und einen zweiten Halteabschnitt auf. Dabei ist der erste Halteabschnitt näher am ersten Endabschnitt angeordnet als der zweite Halteabschnitt. Zugleich weisen wenigstens der erste und/oder der zweite Halteabschnitt einen in Längsrichtung des Gehäuseabschnitts bewegbaren Adaptionsabschnitt auf.

In bestimmten erfindungsgemäßen Ausführungsformen weist der in Längsrichtung des Gehäuseabschnitts bewegbare Adaptionsabschnitt wenigstens ein Federelement, eine Feder oder ein elastisches Element, beispielsweise eine Blatt- oder Spiralfeder, auf oder besteht hieraus.

In einigen erfindungsgemäßen Ausführungsformen weisen wenigstens der erste und/oder der zweite Halteabschnitt einen ring- oder zylinderförmig ausgestalteten Abschnitt auf zum Umfassen oder Umgeben der Dosiervorrichtung entlang eines Teils des Umfangs derselben. Der ring- oder zylinderförmig ausgestaltete Abschnitt hat einen Spalt oder lässt einen Spalt zwischen zwei seiner Abschnitte frei, in dessen Bereich der Halteabschnitt den Umfang der Dosiervorrichtung nicht umgibt oder umfasst.

In bestimmten erfindungsgemäßen Ausführungsformen weist der Gehäuseabschnitt einen Gehäuserücken und eine Gehäuseunterseite auf. Der erste und der zweite Halteabschnitt sind in einigen erfindungsgemäßen Ausführungsformen der Gehäuseunterseite zugeordnet oder an dieser angeordnet.

In einigen erfindungsgemäßen Ausführungsformen sind der erste und der zweite Halteabschnitt derart angeordnet, um einen vorderen und einen hinteren Endabschnitt (oder ein vorderes und ein hinteres Ende) der Dosiervorrichtung zu umgeben oder zu umfassen, nicht aber einen zwischen vorderem und hinterem Endabschnitt gelegenen Abschnitt, beispielsweise einen Mittelabschnitt, derselben.

In bestimmten erfindungsgemäßen Ausführungsformen weist der Gehäuseabschnitt einen Gehäuserücken und eine Gehäuseunterseite auf. Die Betätigungsvorrichtung zum Ein- und/oder Ausschalten der lichtemittierenden Vorrichtung ist in manchen erfindungsgemäßen Ausführungsformen dem Gehäuserücken zugeordnet oder an diesem angeordnet.

In einigen erfindungsgemäßen Ausführungsformen ist die Betätigungsvorrichtung zum Ein- und/oder Ausschalten der lichtemittierenden Vorrichtung nicht weiter vom ersten Endabschnitt - bezogen auf die Längsrichtung des Gehäuseabschnitts oder des Dosierapparats - entfernt angeordnet als der erste und/oder der zweite Halteabschnitt.

In bestimmten erfindungsgemäßen Ausführungsformen weist die lichtemittierende Vorrichtung eine optische Linse auf oder ist angeordnet, um durch eine solche hindurch Licht zu emittieren.

In einigen erfindungsgemäßen Ausführungsformen ist die Spannungsquelle für die lichtemittierende Vorrichtung im zweiten Endabschnitt angeordnet.

In bestimmten erfindungsgemäßen Ausführungsformen ist die Spannungsquelle ein Akku.

In manchen erfindungsgemäßen Ausführungsformen ist die Spannungsquelle ausgestaltet, um mittels Induktion geladen zu werden.

In manchen erfindungsgemäßen Ausführungsformen ist die Aufnahmevorrichtung derart angeordnet, dass aus der Austrittsöffnung einer in die Aufnahmevorrichtung aufgenommenen Dosiervorrichtung austretendes lichtaushärtendes Material in einen Lichtkegel der lichtemittierende Vorrichtung, bei deren Betrieb, eintritt.

In einigen erfindungsgemäßen Ausführungsformen weist der Gehäuseabschnitt an seinem ersten Endabschnitt einen Vorsprung auf, dessen Durchmesser oder ein beliebiger Querschnitt hiervon geringer ist als ein Durchmesser des Gehäuseabschnitts im Bereich seines ersten und/oder seines zweiten Halteabschnitts, oder ein Querschnitt hiervon.

In manchen erfindungsgemäßen Ausführungsformen ist der Endabschnitt schnabelförmig geformt oder ausgezogen.

In einigen erfindungsgemäßen Ausführungsformen steht der Endabschnitt in Längsrichtung über den ersten Halteabschnitt hinaus über.

In manchen erfindungsgemäßen Ausführungsformen weist der Dosierapparat wenigstens eine im Gehäuseabschnitt aufgenommene Dosiervorrichtung auf.

In bestimmten erfindungsgemäßen Ausführungsformen weist die Dosiervorrichtung einen Dosierkanal auf.

In manchen erfindungsgemäßen Ausführungsformen weisen die Dosiervorrichtung und/oder der Dosierkanal einen lösbaren Verschluss auf.

In gewissen erfindungsgemäßen Ausführungsformen ist der Dosierkanal aus Metal oder weist ein Metall auf.

In manchen erfindungsgemäßen Ausführungsformen liegen im ersten Endabschnitt - vorzugsweise allein oder ausschließlich - eine Austrittsöffnung des Dosierkanals sowie eine Austrittsfläche (beispielsweise eine Glasfläche, eine Linsenfläche, oder dgl.) vor, durch welche aus der lichtemittierenden Vorrichtung austretendes Licht hindurch tritt.

In bestimmten erfindungsgemäßen Ausführungsformen durchläuft eine Gerade, welche die Austrittsöffnung des Dosierkanals mit einer Austrittsfläche (beispielsweise eine Glasfläche, eine Linsenfläche, oder dgl.) verbindet, ein Raum, in welchem kein Abschnitt des Gehäuseabschnitts liegt.

In bestimmten erfindungsgemäßen Ausführungsformen weist die Dosiervorrichtung einen Dosierkanal auf, durch welchen hindurch das lichtaushärtende Materials ausgebracht oder aufgetragen wird. Dabei ist die Dosiervorrichtung - insbesondere oder vorzugsweise ganz oder im Wesentlichen - aus einem ersten Material hergestellt oder weist ein erstes Material auf, wohingegen der Dosierkanal - insbesondere vorzugsweise ganz oder im Wesentlichen - aus einem zweiten Material hergestellt ist oder ein solches aufweist. Das zweite Material unterscheidet sich vom ersten Material.

Das Reservoir ist in bestimmten erfindungsgemäßen Ausführungsformen als Behältnis oder als Inneres einer Kartusche ausgestaltet.

In bestimmten erfindungsgemäßen Ausführungsformen ist die Dosiervorrichtung lösbar mit dem Dosierkanal verbunden.

In gewissen erfindungsgemäßen Ausführungsformen ist der Dosierkanal mittels eines Luer-Lock-Systems auf die Dosiervorrichtung oder deren Deckel aufgesetzt.

In manchen erfindungsgemäßen Ausführungsformen weist die Dosiervorrichtung eine Dichtvorrichtung, z. B. einen Dichtring, beispielsweise in Gestalt eines O-Rings, auf. Mittels der Dichtvorrichtung ist es vorteilhaft möglich, eine Abdichtung zwischen der Dosiervorrichtung oder dem Reservoir einerseits und einem Deckel der Dosiervorrichtung andererseits gegenüber einem Äußeren zu erzielen.

In bestimmten erfindungsgemäßen Ausführungsformen ist der Deckel der Dosiervorrichtung, aus welchem der Dosierkanal abgeht oder welcher letzteren aufweist, aus einem gegenüber der Dosiervorrichtung härteren Material hergestellt oder weist zumindest ein härteres Material auf. Diese Ausgestaltung kann in einigen erfindungsgemäßen Ausführungsformen vorteilhaft dazu beitragen oder gewährleisten, die Dichtigkeit zwischen Dosiervorrichtung und ihrem Äußeren im Bereich des Deckels auch bei erfolgender elastischer Verformung der Dosiervorrichtung, beispielsweisweise bei Ausüben von Druck hierauf, aufrecht zu erhalten.

In manchen erfindungsgemäßen Ausführungsformen ist der Gehäuseabschnitt aus demselben Material (z. B. Polyethylen (PE)) wie das Reservoir selbst oder weist ein solches auf.

In bestimmten erfindungsgemäßen Ausführungsformen ist die lichtemittierende Vorrichtung mit wenigstens einem Lichtleiter (Glasfaser, etc.) verbunden oder weist wenigstens einen solchen auf, welcher das Licht von der lichtemittierenden Vorrichtung (welche in einem zweiten Endabschnitt des Gehäuseabschnitts angeordnet sein kann) zum ersten Endabschnitt oder in die Nähe einer Austrittsöffnung der Dosiervorrichtung führt.

In manchen erfindungsgemäßen Ausführungsformen ist der Gehäuseabschnitt aus einem Metall (Aluminium, Edelstahl, Titan etc.) gefertigt oder weist ein solches auf.

In bestimmten erfindungsgemäßen Ausführungsformen ist zur Erhöhung des Drucks innerhalb des Reservoirs eine interne Gaspatrone und/oder eine andere Vorrichtung zum Aufbauen von Druck vorgesehen. Dies kann vorteilhaft ein umfassenderes Leeren des Reservoirs begünstigen. Ferner kann dies ein Arbeiten mit dem erfindungsgemäßen Dosierapparat auch über Kopf erlauben.

In manchen erfindungsgemäßen Ausführungsformen weist das Reservoir in wenigstens einem Bereich hiervon und/oder in seiner Mantelfläche, oder in einem Hauptbereich jeweils hiervon, eine Wandstärke in einem Bereich von 0,75 bis 1,25 mm, vorzugsweise von 0,9 bis 1,1 mm, wiederum bevorzugt in einem Bereich von 0,95 bis 1,05 mm, auf. Diese Bereiche haben sich als besonders geeignet erwiesen, was die gewünschte Verformbarkeit und die erforderliche Beständigkeit und Belastbarkeit betrifft.

In bestimmten erfindungsgemäßen Ausführungsformen weist die Dosiervorrichtung lichtaushärtbares Material auf, welches mittels Strahlung in einem Bereich von 380 bis 500 Nanometer (nm), insbesondere im Bereich von 450 bis 480 nm, insbesondere bei 470 nm, und insbesondere in einem Bereich von 390 bis 410 nm, insbesondere bei 405 nm aushärtet.

In manchen erfindungsgemäßen Ausführungsformen ist das Reservoir aus einem lichtundurchlässigen Material hergestellt. Das lichtundurchlässige Material ist vorzugsweise, wenigstens oder insbesondere lichtundurchlässig für einen Strahlungsbereich von 380 bis 500 Nanometer (nm), insbesondere im Bereich von 450 bis 480 nm, insbesondere bei 470 nm, und insbesondere in einem Bereich von 390 bis 410 nm, insbesondere bei 405 nm.

In bestimmten erfindungsgemäßen Ausführungsformen weist die Dosiervorrichtung und/oder der Dosierkanal einen lösbaren, Verschluss gegenüber einem Äußern (also der Umgebung) auf. In manchen erfindungsgemäßen Ausgestaltungen ist der Verschluss eine Verschlusskappe.

Der Verschluss ist in einigen erfindungsgemäßen Ausführungsformen lichtundurchlässig, vorzugsweise für einen Strahlungsbereich von 380 bis 500 Nanometer (nm), insbesondere im Bereich von 450 bis 480 nm, insbesondere bei 470 nm, und insbesondere in einem Bereich von 390 bis 410 nm, insbesondere bei 405 nm.

In manchen erfindungsgemäßen Ausführungsformen ist die lichtemittierende Vorrichtung zum Aushärten des lichtaushärtenden Materials eine LED-Lampe und/oder eine Blitzlichtvorrichtung oder weist dergleichen auf.

In bestimmten erfindungsgemäßen Ausführungsformen ist der Gehäuseabschnitt ausgestaltet, um die lichtemittierende Vorrichtung lösbar aufzunehmen. Dies kann beispielsweise durch Einstecken, Einrasten, Verklemmen oder dergleichen erfolgen. Das Gehäuse kann entsprechend vorbereitet sein.

In gewissen erfindungsgemäßen Ausführungsformen weisen der Gehäuseabschnitt und die Dosiervorrichtung, insbesondere der Deckel der Dosiervorrichtung, einen Bajonettverschluss oder einander entsprechende Teile eines Bajonettverschlusses zur lösbaren Aufnahme der Dosiervorrichtung im oder am Gehäuseabschnitt auf.

In manchen erfindungsgemäßen Ausführungsformen weist die Dosiervorrichtung oder der Gehäuseabschnitt eine Vorrichtung auf zum lösbaren Aufnehmen der lichtemittierende Vorrichtung. Diese Vorrichtung ist in einigen erfindungsgemäßen Ausführungsformen als eine Schnappvorrichtung ausgestaltet.

In anderen erfindungsgemäßen Ausführungsformen ist diese Vorrichtung als eine Steckvorrichtung und dergleichen ausgestaltet.

In manchen erfindungsgemäßen Ausführungsformen weist die lichtemittierende Vorrichtung ein Betätigungsvorrichtung (Schalter oder dgl.) auf oder ist hiermit in Signalkommunikation verbunden, mittels welchem sie in einen Daueremittierbetrieb versetzt werden kann.

In bestimmten erfindungsgemäßen Ausführungsformen weist die lichtemittierende Vorrichtung eine Betätigungsvorrichtung auf oder ist hiermit in Signalkommunikation verbunden, mittels welcher sie durch Druck hierauf in einen Emittierbetrieb versetzt werden kann, welcher nur für die Zeitdauer besteht, in welcher der Druck hierauf besteht. Dies kann mittels eines Druckschalters mit Rückstellvorrichtung bewirkt werden.

Beliebige erfindungsgemäße Ausführungsformen können einen oder mehrere beliebige der folgenden Vorteile aufweisen oder bieten.

So besteht ein Vorteil in der Austauschbarkeit verbrauchter oder durch Benutzung geleerter Dosiervorrichtungen, deren Reservoir nicht mehr genügend lichtaushärtendes Material aufweist. Der Gehäuseabschnitt und alle übrigen Komponenten können beibehalten und weiterhin benutzt werden. Allein die Dosiervorrichtung mit dem Reservoir gilt es auszutauschen. Dies senkt vorteilhaft die Materialkosten, die Entsorgungskosten, den Bedarf an Lagerraum und dergleichen. Dabei kann aufgrund der Trennbarkeit von Reservoir und Deckel der Dosiervorrichtung in einigen erfindungsgemäßen Ausführungsformen selbst der Deckel weiter verwendet werden.

Erfindungsgemäß sind der Dosierkanal und die lichtemittierende Vorrichtung - anders als beispielsweise in den aus der DE 10 2011 054 959 A1 bekannten Dosierapparaten - nicht an zwei gegenüberliegenden Endabschnitten des Dosierapparats oder des Gehäuseabschnitts sondern an demselben Endabschnitt ausgestaltet oder vorgesehen. Daher ist nach Ausbringen des lichtaushärtenden Materials auf beispielsweise eine Reparaturstelle ein Umdrehen des Dosierapparats zum Bestrahlen der Reparaturstelle, um das ausgebrachte Material mittels der lichtemittierenden Vorrichtung auszuhärten, nicht erforderlich. Erfindungsgemäß kann damit ein Umdrehen des Dosierapparats im Gebrauch entfallen. Damit entfällt aber auch das bei im Gebrauch regelmäßig umzudrehenden Dosierapparaten des Standes der Technik zu beobachtende Umverteilen des lichtaushärtenden Materials im Reservoir, welches sich auch als ein Zurückfließen bezeichnen lässt, und welches - insbesondere bei nicht mehr vollständig gefülltem Reservoir - zu dem von halbleeren Ketchup-Flaschen bekannten Phänomen führt. Letzteres besteht darin, dass der Benutzer nach einem Gebrauch der am gegenüberliegenden Ende angeordneten lichtemittierenden Vorrichtung und erneutem Wenden oder Umdrehen des Dosierapparats eine gewisse Weile warten muss, bis sich lichtaushärtendes Material wieder in ausreichender Menge an dem den Dosierkanal aufweisenden Ende des Reservoirs einfindet. Dies kann insbesondere bei zähflüssigem lichtaushärtendem Material das Arbeiten mit dem Dosierapparat des Standes der Technik erschweren. Zudem kann das schließlich ausgebrachte lichtaushärtende Material bei häufigem Umdrehen des Dosierapparats während seiner Benutung aufgrund des Umdrehens mit Lufteinschlüssen vermischt werden. Letzteres schadet dem sauberen und konstanten Ausbringen von lichtaushärtendem Material. Diese Nachteile treten erfindungsgemäß nicht oder in deutlich geringem Maße auf.

Zugleich ist ein Einhand-Betrieb des erfindungsgemäßen Dosierapparats vorteilhaft bis einschließlich des Aushärtens möglich. Ein Beleuchten des mittels des in einer Hand liegenden Dosierapparats ausgebrachten lichtemittierenden Materials mittels einer in der anderen Hand liegenden lichtemittierenden Vorrichtung ist erfindungsgemäß nicht erforderlich. Die zweite Hand kann vielmehr beispielsweise zum Halten des Werkstücks verwendet werden.

Der hierin für manche erfindungsgemäße Ausführungsformen vorgeschlagene Bajonettverschluss hat sich als besonders geeignet erwiesen, um eine schnelle, einfache und zuverlässige Austauschbarkeit zu gewährleisten.

In einer Anzahl der erfindungsgemäßen Ausführungsformen sind unterschiedliche Komponenten aus verschiedenen Materialien gefertigt oder weisen solche auf. Hierdurch kann vorteilhaft ein weiterer Beitrag zur Dichtigkeit der Dosiervorrichtung gegenüber einem Äußeren geleistet werden.

Eine Dichtigkeit zwischen den einzelnen Komponenten wird erfindungsgemäß und vorteilhaft erzielt mit den hierin vorgeschlagenen Dichtvorrichtungen.

Das Vorsehen unterschiedlicher Materialien kann ferner vorteilhaft erlauben, die verschiedenen Komponenten des Dosierapparats unabhängig voneinander mit Blick auf ihre jeweilige Funktion auf die jeweils kostengünstigste Weise herzustellen.

Die vorliegende Erfindung wird im Folgenden anhand der beigefügten Zeichnungen, in welcher identische Bezugszeichen gleiche oder ähnliche Bauteile bezeichnen, exemplarisch erläutert. In den Figuren gilt:
- **Fig. 1**: zeigt einen erfindungsgemäßen Dosierapparat in einer ersten Ausführungsform in Seitenansicht;
- **Fig. 2**: zeigt einen erfindungsgemäßen in einer zweiten Ausführungsform in Seitenansicht; und
- **Fig. 3**: zeigt den Gehäuseabschnitt des Dosierapparats der Fig. 1 ohne Dosiervorrichtung in Seitenansicht.

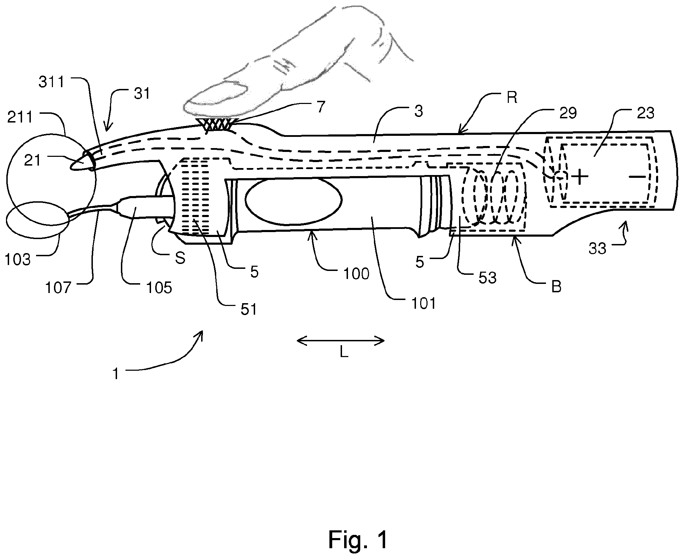

**Fig. 1** zeigt einen erfindungsgemäßen Dosierapparat 1 in Seitenansicht. Dieser weist einen Gehäuseabschnitt 3 und eine Dosiervorrichtung 100 auf. Die Längsrichtung des Dosierapparats 1 sowie des Gehäuseabschnitts 3 ist mit dem Doppelpfeil L markiert.

Der Gehäuseabschnitt 3 weist einen Gehäuserücken R und eine Gehäuseunterseite B auf. Der Gehäuseabschnitt 3 weist ferner einen ersten Endabschnitt 31 (siehe das linke Ende des Gehäuseabschnitts 3, bezogen auf die Darstellung der Fig. 1) und einen zweiten Endabschnitt 33 (rechtes Ende in Fig. 1) auf.

Im Bereich der Gehäuseunterseite B ist eine Aufnahmevorrichtung 5 ausgestaltet. Sie dient der lösbaren Aufnahme der Dosiervorrichtung 100.

Im Beispiel der Fig. 1 besteht die Aufnahmevorrichtung 5 aus einem ersten Halteabschnitt 51 und einem zweiten Halteabschnitt 53. Der erste Halteabschnitt 51 liegt näher am ersten Endabschnitt 31 als der zweiten Halteabschnitt 53. Der erste Halteabschnitt 51 liegt weiter vom zweiten Endabschnitt 33 entfernt als der zweite Halteabschnitt 53.

Der erste Halteabschnitt 51 und der zweite Halteabschnitt 53 halten gemeinsam die Dosiervorrichtung 100 am Gehäuseabschnitt 3.

Die Aufnahmevorrichtung 5 kann mehr Komponenten aufweisen als hier gezeigt. Sie kann ferner auch nur einen Halteabschnitt, wahlweise den ersten oder den zweiten, aufweisen. Diese ebenfalls erfindungsgemäße Ausführungsform ist allerdings in keiner der Figuren gezeigt.

Im rein exemplarischen Beispiel der Fig. 1 ist die Haltevorrichtung 5 ausgestaltet, um die Dosiervorrichtung 100 zunächst gegen die Wirkung des Federelements 29 von links (bezogen auf die Darstellung der Fig. 1) nach rechts in den zweiten Halteabschnitt 53 hinein drücken zu können. Anschließend kann ein vorderer Bereich oder ein Auslassbereich der Dosiervorrichtung 100 durch einen Spalt S im ersten Halteabschnitt 51 hindurch nach oben, d. h. in Richtung zum Gehäuserücken R, bewegt werden. Erlaubt man dem Federelement 29 im Anschluss hieran, sich zumindest teilweise zu entspannen indem man die Dosiervorrichtung 100 vorsichtig loslässt, so drückt das Federelement 29 die Dosiervorrichtung 100 gegen das Innere des sich nach links hin verengenden, zumindest abschnittsweise ringförmig ausgestalteten ersten Halteabschnitts 31. Die Dosiervorrichtung 100 ist somit mittels des ersten und des zweiten Halteabschnitts 31, 33 zwischen diesen verklemmt. Wird die Dosiervorrichtung 100 gegen die Wirkung des Federelements 29 nach rechts oder zum zweiten Halteabschnitt 53 hin gedrückt, so lässt sich die Dosiervorrichtung 100 auch wieder vom Gehäuseabschnitt 3 entfernen bzw. aus dem Dosierapparat 1 entnehmen.

Das Federelement 29 trägt dazu bei, dass im Gehäuseabschnitt 3 Dosiervorrichtungen 100 unterschiedlicher Länge aufgenommen werden können. Wird beispielsweise anstelle der in Fig. 1 gezeigten Dosiervorrichtung 100 eine um 10% längere Dosiervorrichtung verwendet, so ist das Federelement 29 beim Einlegen der Dosiervorrichtung in den Gehäuseabschnitt 3 - ebenso wie bei eingelegter Dosiervorrichtung - unter höherer Spannung als im in Fig. 1 gezeigten Beispiel. Ein Teil des Federelements 29 kann sich bewegen und passt damit die Haltvorrichtung 5 an die Länge der Dosiervorrichtung 100 an. Daher kann das Federelement 29 auch als Adaptionsabschnitt bezeichnet werden.

Das Vorstehen eines Adaptionsabschnitts, welcher kein Federelement ist, ist ebenfalls von der vorliegenden Erfindung umfasst. So kann der Adaptionsabschnitt beispielsweise als eine mechanisch verstellbare Vorrichtung, etwa eine Rändelschraube, Spindel oder dgl. aus gestaltet sein.

Die Aufnahmevorrichtung 5 kann ferner ausgestaltet sein, um nacheinander Dosiervorrichtungen 100 aufzunehmen, welches sich nicht oder nicht nur in ihrer Länge sondern (auch) in ihrer Dicke oder ihrem Querschnitt unterscheiden. Dies ist beispielsweise bereits mit den in Fig. 1 gezeigten ersten und zweiten Halteabschnitten 51, 53 möglich. Daher ist der erfindungsgemäße Dosierapparat 1 vorteilhaft geeignet, Dosiervorrichtungen 100 mit unterschiedlichen Volumina an lichtaushärtendem Material aufnehmen bzw. hiermit benutzt zu werden.

Die Aufnahmevorrichtung 5 ist ausgestaltet, um einen vorderen und einen hinteren Endabschnitt der Dosiervorrichtung 100 zu umgeben oder zu umfassen, nicht aber einen zwischen vorderem und hinterem Endabschnitt gelegenen (Mittel-)Abschnitt derselben. Diese ist jedenfalls im Bereich der Gehäuseunterseite B nicht gestützt oder gehalten sondern für den Benutzer zugänglich, etwa zum Zweck des Aufbringens von Druck und oder zur Entnahme der Dosiervorrichtung 100 von Gehäuseabschnitt 3.

Der Gehäuseabschnitt 3 weist eine Betätigungsvorrichtung 7 auf. Mit ihr kann die LED-Lampe 21 ein- und ausgeschaltet werden oder in einen vorbestimmten Lichtmodus versetzt werden (intermittierend, zeitlich begrenzt, nur solange Druck auf die Betätigungsvorrichtung 7 ausgeübt wird, usw.).

In den in den Figuren gezeigten erfindungsgemäßen Ausführungsformen ist die Betätigungsvorrichtung 7 auf dem Gehäuserücken R angeordnet. Sie liegt ferner in - bezogen auf die Längsrichtung L des Dosierapparats 1 - Höhe des vorderen Bereichs der Dosiervorrichtung 100. Diese Anordnung erlaubt es dem Benutzer vorteilhaft, mit Daumen und Mittelfinger Druck auf das Reservoir 101 aufzubringen, um lichtaushärtendes Material auszubringen, und anschließend oder gleichzeitig die Betätigungsvorrichtung 7 mit dem Zeigefinger zu bedienen, um das ausgebrachte Material aushärten zu lassen. Dabei kann der Dosierapparat 1 sowohl während des Ausbringens als auch während des Aushärtens unverändert in der(selben) Hand liegen bleiben. Ein Umdrehen des Dosierapparats 1, ein Umgreifen, usw. kann entfallen. Dies macht das Arbeiten mit ihm einfach und angenehm.

Gut zu erkennen ist, dass Aufnahmevorrichtung 5 und LED-Lampe 21 derart angeordnet sind, dass ein Lichtkegel 211 (oder Lichtkreis) der LED-Lampe 21 in einen Austrittsbereich 103 der Dosiervorrichtung 100, welcher sich an eine Austrittsöffnung für das lichtaushärtende Material, etwa ein Klebstoff, anschließt, und somit auf das ausgetretene lichtaushärtende Material fällt.

Die Dosiervorrichtung 100 weist ein Reservoir 101 auf. Das Reservoir 101 weist in seinem Inneren lichtaushärtendes Material (hier nicht dargestellt) auf. Bringt man Druck auf das Reservoir 101 auf, zum Beispiel indem mit Daumen und Mittelfinger auf die gegenüberliegenden, verformbaren Außenflächen des Reservoirs 101 gedrückt wird, so wird das lichtaushärtende Material in den Dosierkanal 107 hinein gefördert oder gepresst und aus diesem in den Austrittsbereich 103 gefördert. Der Austrittsbereich 103 stellt die Verbindung eines Inneren der Dosiervorrichtung 100, in welcher das lichtaushärtende Material keinem Umgebungslicht ausgesetzt ist, und einem Äußeren der Dosiervorrichtung 100, in welcher das lichtaushärtende Material Umgebungslicht ausgesetzt ist, oder einen Übergang zwischen dem Inneren und dem Äußeren, dar.

Der Dosierkanal 107 kann rein exemplarisch in einen Deckel 105 der Dosiervorrichtung 100 bis gegen einen Absatz eingeschoben sein. Der Dosierkanal 107 kann auf geeignete Weise im Deckel 105 fixiert sein. Die Fixierung kann beispielsweise in Form einer Presspassung, einer Verrastung und/oder eine Klebung erfolgen.

Der Dosierkanal 107 kann aus Metall oder einer Legierung hergestellt sein. Er weist exemplarisch die folgenden Abmaße auf: Innendurchmesser 0,8 mm, Außendurchmesser 1,2 mm, Länge beispielsweise ca. 12 mm.

Das Reservoir 101 ist in diesem Ausführungsbeispiel aus einem ersten Material, z.B. einem weichen Polyethylen (zum Beispiel LDPE - *low density polyethylene*) *-* hergestellt oder weist ein solches auf. Der Deckel 105 ist aus einem dritten Material - z.B. einem härteren Polymer, jedenfalls aber einem relativ zum ersten Material härteren Material - ausgestaltet oder weist ein solches auf.

Sowohl das erste als auch das dritte Material werden derart ausgewählt (oder bearbeitet, z. B. durch schwarze oder andersartige Beschichtung oder Färbung), dass sie - vorzugsweise, wenigstens oder insbesondere in einem Lichtwellenlängenbereich von 380 bis 500 Nanometer (nm) - lichtundurchlässig sind, um das lichtaushärtbare Material des Reservoirs 1 und des Deckels 105 gegen ungewolltes Aushärten durch Lichteinwirkung zu bewahren.

Die Verbindung zwischen dem Reservoir 101 und dem Deckel 105 ist exemplarisch durch ein Gewinde ausgeführt, zum Beispiel durch ein Gewinde M10x1. Alternativ kann die Verbindung auch beispielsweise mittels Verkleben, Aufstecken usw. bewirkt werden.

Zum weiteren Abdichten, und um ggf. auch zu verhindern, dass sich aufgrund des weichen ersten Materials des Reservoirs 101 auch dessen im Deckel 105 steckenden Wandung bei einer Druckaufbringung auf das Reservoir 101 verformt, kann (hier nicht gezeigt) ein Dichtungsring (z. B. O-Ring aus Polymer) zur Abdichtung des Reservoirs 101 im Bereich eines Gewindes in den Deckel 105 eingesetzt werden. Durch das - insbesondere vollständige - Aufschrauben der Dosiervorrichtung auf das Gewinde des Reservoirs 101 wird mittels des Dichtungsrings die Verbindung zwischen diesen beiden Bauteilen gegenüber einem Äußeren abgedichtet.

Der Gehäuseabschnitt 3 weist einer LED-Lampe 21 als Beispiel einer lichtemittierenden Vorrichtung auf. Die LED-Lampe, welche auch eine Blitzlicht-Vorrichtung oder eine andere Lichtquelle wie Laser und dgl. sein könnte, ist in einem Vorsprung 311 des ersten Endabschnitts angeordnet. Die LED-Lampe ist wahlweise lösbar (und damit austauschbar) oder unlösbar mit dem Gehäuseabschnitt 3 verbunden. Der Vorsprung 311 hat einen geringeren Durchmesser, Querschnitt oder eine kleinere Querschnittsfläche als der Gehäuseabschnitt 3 beispielsweise im Bereich des ersten oder zweiten Halteabschnitts 51, 53. Zu erkennen ist in den Figuren ferner, dass im ersten Endabschnitt 31 nur der Vorsprung 311 mit der LED-Lampe 21 und der Dosierkanal 107 mit der Austrittsöffnung vorliegen. Zwischen Vorsprung 311 und Dosierkanal 107 kann, wie im vorliegenden Beispiel, ein Spalt oder ein Einschnitt des Gehäuseabschnitts 3 vorgesehen sein.

Nach seinem Ausbringen kann das lichtaushärtende Material durch Licht, in diesem Ausführungsbeispiel durch LED-Licht, vorzugsweise im Lichtwellenlängenbereich zwischen 390 und 405 Nanometer (nm), ausgehärtet werden. Dieses LED-Licht wird durch die LED-Lampe 21 bereitgestellt, welche mittels nur angedeuteter Spannungsleitungen mit der im zweiten Endabschnitt 33 angeordneten Spannungsquelle 23 verbunden ist.

Wegen weiterer, optional vorgesehener Merkmale der Dosiervorrichtung 100 sei auf die DE 10 2011 054 959 A1 verwiesen. Deren diesbezüglicher Inhalt ist hiermit per Verweis zum Gegenstand auch der vorliegenden Offenbarung gemacht.

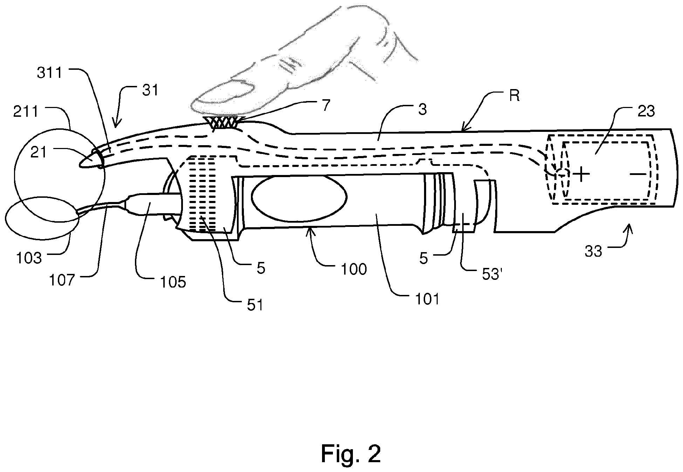

**Fig. 2** zeigt einen Dosierapparat 1 in einer zweiten erfindungsgemäßen Ausführungsform. Sie unterscheidet sich von jener mit Bezug auf Fig. 1 erläuterte erste Ausführungsform allein ein der Ausgestaltung des zweiten Halteabschnitts 53'.

Der zweite Halteabschnitt 53' weist kein Federelement 29 in Gestalt einer Metallfeder auf. Der Halteabschnitt 53' entfaltet seine Haltewirkung dadurch, dass er einen hinteren Abschnitt der Dosiervorrichtung 100 (welcher an jenem Ende der Dosiervorrichtung 100 angeordnet ist, welches deren Ende gegenüberliegt, welches den Dosierkanal 105 trägt) mittels einer Klemmvorrichtung festklemmt. Die Klemmvorrichtung hat beispielsweise zwei Klemmbacken. Die Klemmbacken können zum Einlegen der Dosiervorrichtung 100 in den Gehäuseabschnitt 3 mittels der Dosiervorrichtung 100 auseinander gedrückt werden und diese nach Einlegen seitlich, ggf. unter Vorspannung, begrenzen. Die in Fig. 2 gezeigt Ausführungsform erlaubt es, auf ein Federelement zu verzichten, was die Fertigung des Gehäuseabschnitts 3 oder des gesamten Dosierapparats 1 erleichtert und günstiger macht.

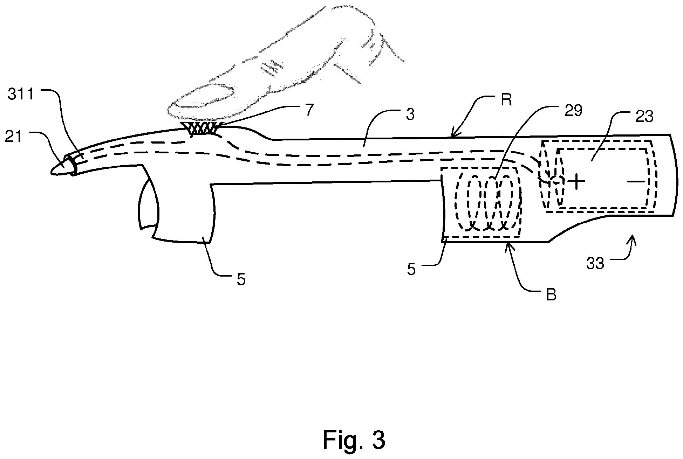

**Fig. 3** zeigt den Gehäuseabschnitt 3 des Dosierapparats 1 der Fig. 1 ohne Dosiervorrichtung in Seitenansicht zur übersichtlicheren Darstellung des Gehäuseabschnitts 3.

**Bezugszeichenliste**

| **Bezugszeichen** | **Beschreibung** |
|---|---|
| 100 | Dosiervorrichtung |
| 101 | Reservoir |
| 103 | Austrittsbereich |
| 105 | Deckel |
| 107 | Dosierkanal |
| 1 | Dosierapparat |
| 3 | Gehäuseabschnitt |
| 5 | Aufnahmevorrichtung |
| 51 | erster Halteabschnitt |
| 53, 53' | zweiter Halteabschnitt |
| 7 | Betätigungsvorrichtung |
| 21 | LED-Lampe |
| 211 | Lichtkegel |
| 23 | Spannungsquelle |
| 29 | Federelement |
| 31 | erster Endabschnitt |
| 311 | Vorsprung |
| 33 | zweiter Endabschnitt |
| L | Längsrichtung |
| R | Gehäuserücken |
| B | Gehäuseunterseite |
| S | Spalt |

## Patentansprüche

1. Dosierapparat (1), zum handgesteuerten Dosieren eines lichtaushärtenden Materials, aufweisend einen Gehäuseabschnitt (3), wobei der Gehäuseabschnitt (3) wenigstens aufweist:
- einen ersten Endabschnitt (31) und einen diesem gegenüberliegend angeordnetem zweiten Endabschnitt (33);
- eine Aufnahmevorrichtung (5) zum lösbaren Aufnehmen wenigstens einer Dosiervorrichtung (100), in welcher das lichtaushärtende Material vorliegt, wobei die Dosiervorrichtung (100) eine Austrittsöffnung aufweist, aus welchem das lichtaushärtende Material aus dieser austreten kann;
- eine lichtemittierende Vorrichtung zum Aushärten des lichtaushärtenden Materials, insbesondere eine LEDLampe (21) und/oder eine Blitzlichtvorrichtung;
- wobei die Aufnahmevorrichtung (5) derart ausgestaltet ist, dass die Austrittsöffnung der Dosiervorrichtung (100) nach deren Verbinden mit der Aufnahmevorrichtung (5) dem ersten Endabschnitt (31) zugewandt ist;
- wobei die lichtemittierende Vorrichtung in oder am ersten Endabschnitt (31) des Gehäuseabschnitts (3) angeordnet ist oder angeordnet ist, um bei ihrer Betätigung Licht in Richtung auf den ersten Endabschnitt (31) des Gehäuses (3) abgeben zu können.

2. Dosierapparat (1) nach Anspruch 1 , wobei die Aufnahmevorrichtung (5) zum lösbaren Aufnehmen wenigstens einer Dosiervorrichtung (100) einen ersten Halteabschnitt (51) aufweist, mittels welchem die Dosiervorrichtung (100) am Gehäuseabschnitt (3) verklemmt oder mittels Gewinde, Rastverbindung oder Bajonettverschluss mit diesem verbunden werden kann.

3. Dosierapparat (1) nach Anspruch 1 , wobei die Aufnahmevorrichtung (5) zum lösbaren Aufnehmen wenigstens einer Dosiervorrichtung (100) einen ersten Halteabschnitt (51) und einen zweiten Halteabschnitt (53) aufweist, wobei der erste Halteabschnitt (51) näher am ersten Endabschnitt (31) angeordnet ist als der zweite Halteabschnitt (53), und wobei wenigstens der erste und/oder der zweite Halteabschnitt (51 , 53) einen in Längsrichtung (L) des Gehäuseabschnitts (3) bewegbaren Adaptionsabschnitt aufweist.

4. Dosierapparat (1) nach Anspruch 3, wobei der in Längsrichtung (L) des Gehäuseabschnitts (3) bewegbare Adaptionsabschnitt wenigstens ein Federelement (29) aufweist oder hieraus besteht.

5. Dosierapparat (1) nach einem der Ansprüche 2 bis 4, wobei wenigstens der erste und/oder der zweite Halteabschnitt (51 , 53) einen ring- oder zylinderförmig ausgestalteten Abschnitt hat zum Umfassen oder Umgeben der Dosiervorrichtung (100) entlang eines Teils des Umfangs derselben, wobei der ring- oder zylinderförmig ausgestaltete Abschnitt einen Spalt (S) aufweist, entlang welchem er den Umfang der Dosiervorrichtung (100) nicht umgibt oder umfasst.

6. Dosierapparat (1) nach einem der vorangegangenen Ansprüche, wobei der Gehäuseabschnitt (3) einen Gehäuserücken (R) und eine Gehäuseunterseite (B) aufweist, und wobei der erste und der zweite Halteabschnitt (51 , 53) der Gehäuseunterseite (B) zugeordnet oder an dieser angeordnet sind.

7. Dosierapparat (1) nach einem der Ansprüche 2 bis 6, wobei der erste und der zweite Halteabschnitt (51 , 53) derart angeordnet sind, um einen vorderen und einen hinteren Endabschnitt der Dosiervorrichtung (100) zu umgeben oder zu umfassen, nicht aber einen zwischen vorderem und hinterem Endabschnitt gelegenen Mittelabschnitt derselben.

8. Dosierapparat (1) nach einem der vorangegangenen Ansprüche, wobei der Gehäuseabschnitt (3) einen Gehäuserücken (R) und eine Gehäuseunterseite (B) aufweist, und wobei eine Betätigungsvorrichtung (7) zum Ein- und/oder Ausschalten der lichtemittierenden Vorrichtung dem Gehäuserücken (R) zugeordnet oder an diesem angeordnet ist.

9. Dosierapparat (1) nach einem der vorangegangenen Ansprüche, wobei eine Betätigungsvorrichtung (7) zum Ein- und/oder Ausschalten der lichtemittierenden Vorrichtung nicht weiter vom ersten Endabschnitt (31) entfernt angeordnet ist als der erste und/oder der zweite Halteabschnitt (51 , 53).

10. Dosierapparat (1) nach einem der vorangegangenen Ansprüche, wobei die lichtemittierende Vorrichtung eine optische Linse aufweist oder angeordnet ist, um durch eine solche hindurch Licht zu emittieren.

11. Dosierapparat (1) nach einem der vorangegangenen Ansprüche, wobei die Spannungsquelle (23) für die lichtemittierende Vorrichtung im zweiten Endabschnitt (33) angeordnet ist.

12. Dosierapparat (1) nach einem der vorangegangenen Ansprüche, wobei die lichtemittierende Vorrichtung unlösbar mit dem Gehäuseabschnitt (3) verbunden ist.

13. Dosierapparat (1) nach einem der vorangegangenen Ansprüche, wobei die Aufnahmevorrichtung (5) derart angeordnet ist, dass aus der Austrittsöffnung einer hierin aufgenommenen Dosiervorrichtung (100) austretendes lichtaushärtendes Material in einen Lichtkegel (211) der lichtemittierende Vorrichtung, bei deren Betrieb, eintritt.

14. Dosierapparat (1), nach einem der vorangegangenen Ansprüche, wobei der Gehäuseabschnitt (3) an seinem ersten Endabschnitt (31) einen Vorsprung (311) aufweist, dessen Durchmesser oder Querschnitt hiervon geringer ist als ein Durchmesser des Gehäuseabschnitts (3) im Bereich seines ersten und/oder seines zweiten Halteabschnitts (51 , 53), oder ein Querschnitt hiervon.

15. Dosierapparat (1), nach einem der vorangegangenen Ansprüche, welcher wenigstens eine im Gehäuseabschnitt (3) aufgenommene Dosiervorrichtung (100) aufweist.

16. Dosierapparat (1) nach Anspruch 15, wobei die Dosiervorrichtung (100) einen Dosierkanal (107) aufweist.

17. Dosierapparat (1) nach einem der Ansprüche 15 bis 16, wobei im ersten Endabschnitt (31) allein eine Austrittsöffnung des Dosierkanals (107) sowie eine Austrittsfläche, durch welche aus der lichtemittierenden Vorrichtung austretendes Licht hindurch tritt, vorliegen.

18. Dosierapparat (1) nach einem der Ansprüche 15 bis 17, wobei der Dosierkanal (107) mittels eines LuerLock-Systems auf die Dosiervorrichtung (100) aufgesetzt ist.

## Claims

1. A metering apparatus (1) for metering, in a manually-controlled manner, a light-curing material, comprising a housing portion (3), wherein the housing portion (3) comprises at least:
- a first end portion (31) and, arranged opposite thereto, a second end portion (33);
- a receiving device (5) for releasably receiving at least one metering device (100) in which the light-curing material is present, wherein the metering device (100) has an outlet opening out of which the light-curing material can exit therefrom;
- a light-emitting device for curing the light-curing material, in particular an LED lamp (21) and/or a flashlight device;
- wherein the receiving device (5) is formed such that the outlet opening of the metering device (100) faces towards the first end portion (31) after being connected to the receiving device (5);
- wherein the light-emitting device is arranged in or at the first end portion (31) of the housing portion (3) or is arranged such that, when actuated, it can emit light in the direction of the first end portion (31) of the housing (3).

2. Metering apparatus (1) according to claim 1, wherein the receiving device (5) for releasably receiving at least one metering device (100) has a first holding portion (51), by means of which the metering device (100) can be jammed on the housing portion (3) or connected thereto by means of threading, latching or a bayonet-type coupling.

3. Metering apparatus (1) according to claim 1, wherein the receiving device (5) for releasably receiving at least one metering device (100) has a first holding portion (51) and a second holding portion (53), wherein the first holding portion (51) is arranged closer to the first end portion (31) than the second holding portion (53), and wherein at least the first and/or the second holding portion (51, 53) is provided with an adaption portion which is movable in the longitudinal direction (L) of the housing portion (3).

4. Metering apparatus (1) according to claim 3, wherein the adaption portion which is movable in the longitudinal direction (L) of the housing portion (3) comprises, or consists of, at least one spring element (29).

5. Metering apparatus (1) according to any one of claims 2 to 4, wherein at least the first and/or the second holding portion (51, 53) has a ring-shaped or cylinder-shaped portion for embracing, or surrounding, the metering device (100) along a portion of its circumference, wherein the ring-shaped or cylinder-shaped portion is provided with a gap (S) along which it does not surround, or embrace, the circumference of the metering device (100).

6. Metering apparatus (1) according to any one of the preceding claims, wherein the housing portion (3) has a housing rear (R) and a housing bottom (B), and wherein the first and the second holding portions (51, 53) are associated with the housing bottom (B) or arranged thereat.

7. Metering apparatus (1) according to any one of claims 2 to 6, wherein the first and the second holding portions (51, 53) are arranged so as to surround, or embrace, a front and a rear end portion of the metering device (100) but not a middle portion located between its front and rear end portions.

8. Metering apparatus (1) according to any one of the preceding claims, wherein the housing portion (3) has a housing rear (R) and a housing bottom (B) and wherein an actuation device (7) for switching the light-emitting device on and/or off is associated with the housing rear (R) or arranged thereat.

9. Metering apparatus (1) according to any one of the preceding claims, wherein an actuation device (7) for switching the light-emitting device on and/or off is located at a distance from the first end portion (31) no further than the first and/or the second holding portion (51, 53).

10. Metering apparatus (1) according to any one of the preceding claims, wherein the light-emitting device comprises an optical lens or is arranged to emit light through such a lens.

11. Metering apparatus (1) according to any one of the preceding claims, wherein the voltage source (23) for the light-emitting device is arranged in the second end portion (33).

12. Metering apparatus (1) according to any one of the preceding claims, wherein the light-emitting device is fixedly connected to the housing portion (3).

13. Metering apparatus (1) according to any one of the preceding claims, wherein the receiving device (5) is arranged such that light-curing material exiting via the outlet opening of a metering device (100) received therein enters into a light cone (211) of the light-emitting device during usage thereof.

14. Metering apparatus (1) according to any one of the preceding claims, wherein the housing portion (3) has at its first end portion (31) a protrusion (311), whose diameter or cross-section is smaller than a diameter of the housing portion (3) in the area of its first and/or its second holding portion (51, 53), or a cross-section thereof.

15. Metering apparatus (1) according to any one of the preceding claims, comprising at least one metering device (100) received in the housing portion (3).

16. Metering apparatus (1) according to claim 15, wherein the metering device (100) is provided with a metering channel (107).

17. Metering apparatus (1) according to any one of claims 15 to 16, wherein an outlet opening of the metering channel (107) as well as an outlet area, through which light emitted by the light-emitting device passes, is present only in the first end portion (31).

18. Metering apparatus (1) according to any one of claims 15 to 17, wherein the metering channel (107) is attached to the metering device (100) by means of a Luer-lock system.

## Revendications

1. Appareil de dosage (1), pour le dosage à commande manuelle d'un matériau photodurcissable, présentant une section de boîtier (3), dans lequel la section de boîtier (3) présente au moins :
- une première section d'extrémité (31) et une deuxième section d'extrémité (33) agencée en face de celle-ci ;
- un dispositif de réception (5) pour la réception amovible d'au moins un dispositif de dosage (100), dans lequel il y a le matériau photodurcissable, dans lequel le dispositif de dosage (100) présente une ouverture de sortie, duquel le matériau photodurcissable peut sortir de celle-ci ;
- un dispositif émetteur de lumière pour le durcissement du matériau photodurcissable, en particulier une lampe LED (21) et/ou un dispositif à flash ;
- dans lequel le dispositif de réception (5) est configuré de telle sorte que l'ouverture de sortie du dispositif de dosage (100) après son raccordement au dispositif de réception (5) est tournée vers la première section d'extrémité (31) ;
- dans lequel le dispositif émetteur de lumière est agencé dans ou au niveau de la première section d'extrémité (31) de la section de boîtier (3) ou est agencé pour pouvoir émettre lors de son actionnement de la lumière en direction de la première section d'extrémité (31) du boîtier (3).

2. Appareil de dosage (1) selon la revendication 1, dans lequel le dispositif de réception (5) pour la réception amovible d'au moins un dispositif de dosage (100) présente une première section de retenue (51), au moyen de laquelle le dispositif de dosage (100) peut être calé au niveau de la section de boîtier (3) ou relié à celle-ci au moyen d'un filetage, d'une liaison par encliquetage ou d'une fermeture à baïonnette.

3. Appareil de dosage (1) selon la revendication 1, dans lequel le dispositif de réception (5) pour la réception amovible d'au moins un dispositif de dosage (100) présente une première section de retenue (51) et une deuxième section de retenue (53), dans lequel la première section de retenue (51) est agencée plus proche de la première section d'extrémité (31) que la deuxième section de retenue (53), et dans lequel au moins la première et/ou la deuxième section de retenue (51, 53) présente une section d'adaptation mobile dans le sens longitudinal (L) de la section de boîtier (3).

4. Appareil de dosage (1) selon la revendication 3, dans lequel la section d'adaptation mobile dans le sens longitudinal (L) de la section de boîtier (3) présente au moins un élément ressort (29) ou est constitué de celui-ci.

5. Appareil de dosage (1) selon l'une quelconque des revendications 2 à 4, dans lequel au moins la première et/ou la deuxième section de retenue (51, 53) a une section configurée en forme d'anneau ou de cylindre pour englober ou entourer le dispositif de dosage (100) le long d'une partie de la périphérie de celui-ci, dans lequel la section configurée en forme d'anneau ou de cylindre présente une fente (S), le long de laquelle elle n'entoure ou n'englobe pas la périphérie du dispositif de dosage (100).

6. Appareil de dosage (1) selon l'une quelconque des revendications précédentes, dans lequel la section de boîtier (3) présente un dos de boîtier (R) et une face inférieure de boîtier (B), et dans lequel la première et la deuxième section de retenue (51, 53) sont associées à la face inférieure de boîtier (B) ou sont agencées au niveau de celle-ci.

7. Appareil de dosage (1) selon l'une quelconque des revendications 2 à 6, dans lequel la première et la deuxième section de retenue (51, 53) sont agencées de sorte à entourer ou englober une section d'extrémité avant et une section d'extrémité arrière du dispositif de dosage (100), mais pas une section médiane de celui-ci située entre la section d'extrémité avant et arrière.

8. Appareil de dosage (1) selon l'une quelconque des revendications précédentes, dans lequel la section de boîtier (3) présente un dos de boîtier (R) et une face inférieure de boîtier (B), et dans lequel un dispositif d'actionnement (7) pour la mise en marche et/ou l'arrêt du dispositif émetteur de lumière est associé au dos de boîtier (R) ou est agencé au niveau de celui-ci.

9. Appareil de dosage (1) selon l'une quelconque des revendications précédentes, dans lequel un dispositif d'actionnement (7) pour la mise en marche et/ou l'arrêt du dispositif émetteur de lumière n'est pas plus éloigné de la première section d'extrémité (31) que la première et/ou la deuxième section de retenue (51, 53).

10. Appareil de dosage (1) selon l'une quelconque des revendications précédentes, dans lequel le dispositif émetteur de lumière présente une lentille optique ou est agencé de sorte à émettre de la lumière à travers une telle lentille.

11. Appareil de dosage (1) selon l'une quelconque des revendications précédentes, dans lequel la source de tension (23) pour le dispositif émetteur de lumière est agencée dans la deuxième section d'extrémité (33).

12. Appareil de dosage (1) selon l'une quelconque des revendications précédentes, dans lequel le dispositif émetteur de lumière est relié à la section de boîtier (3) de manière inamovible.

13. Appareil de dosage (1) selon l'une quelconque des revendications précédentes, dans lequel le dispositif de réception (5) est agencé de telle sorte que du matériau photodurcissable sortant de l'ouverture de sortie d'un dispositif de dosage (100) reçu dans celui-ci entre dans un cône de lumière (211) du dispositif émetteur de lumière, lors de son fonctionnement.

14. Appareil de dosage (1), selon l'une quelconque des revendications précédentes, dans lequel la section de boîtier (3) présente au niveau de sa première section d'extrémité (31) une saillie (311), dont le diamètre ou la section transversale est inférieure à un diamètre de la section de boîtier (3) dans la zone de sa première et/ou de sa deuxième section de retenue (51, 53), ou à une section transversale de celle-ci.

15. Appareil de dosage (1), selon l'une quelconque des revendications précédentes, lequel présente au moins un dispositif de dosage (100) reçu dans la section de boîtier (3).

16. Appareil de dosage (1) selon la revendication 15, dans lequel le dispositif de dosage (100) présente un canal de dosage (107).

17. Appareil de dosage (1) selon l'une quelconque des revendications 15 à 16, dans lequel seule une ouverture de sortie du canal de dosage (107) ainsi qu'une surface de sortie, par laquelle de la lumière sortant du dispositif émetteur de lumière passe à travers, sont présentes dans la première section d'extrémité (31).

18. Appareil de dosage (1) selon l'une quelconque des revendications 15 à 17, dans lequel le canal de dosage (107) est posé sur le dispositif de dosage (100) au moyen d'un système Luer-Lock.
